# EUROPÄISCHE PATENTSCHRIFT

(11) **EP 3 540 266 B1**
(45) Veröffentlichungstag und Bekanntmachung des Hinweises auf die Patenterteilung: **28.04.2021**
(21) Anmeldenummer: 18162294.5
(22) Anmeldetag: 16.03.2018
(51) Int. Cl.: F16H 55/08, F16H 55/26, F16H 19/04, F16H 1/06, F16H 55/10

(54) **ZAHNRAD SOWIE ZAHNELEMENT FÜR EIN ZAHNELEMENTGETRIEBE SOWIE ENTSPRECHENDES ZAHNELEMENTGETRIEBE**
GEAR WHEEL AND GEAR ELEMENT FOR A GEAR ELEMENT TRANSMISSION AND CORRESPONDING GEAR ELEMENT TRANSMISSION
ROUE DENTÉE AINSI QU'UN ÉLÉMENT DENTÉ POUR UNE TRANSMISSION À ÉLÉMENTS DENTÉS AINSI QUE TRANSMISSION À ÉLÉMENTS DENTÉS CORRESPONDANTE

(43) Veröffentlichungstag der Anmeldung: 18.09.2019
(73) Patentinhaber: Roto Frank Fenster- und Türtechnologie GmbH, 70771 Leinfelden-Echterdingen (DE)
(72) Erfinder: Siegler, Martin, 73230 Kirchheim/Teck (DE); Wehr, Mathias, 71111 Waldenbuch (DE); Mattausch, Jürgen, 71144 Steinenbronn (DE)
(74) Vertreter: Dietz, Christopher Friedrich

(56) Entgegenhaltungen:
- CA-A- 614 844
- DE-C- 203 196
- US-A- 4 677 870

## Beschreibung

Die Erfindung betrifft ein Zahnrad für ein Zahnelementgetriebe, mit einer Zahnradverzahnung. Die Erfindung betrifft weiterhin ein Zahnelement für ein Zahnelementgetriebe sowie ein Zahnelementgetriebe.

Aus dem Stand der Technik ist beispielsweise die Druckschrift DE 29 10 981 A1 bekannt. Diese beschreibt ein hochbelastbares Zahnrad oder Zahnsegment, wobei der Zahngrund zwischen zwei benachbarten Zähnen in Zahnlängsrichtung in Form einer konkaven, etwa in Richtung der Wälzkörpermantellinie beziehungsweise einer Tangente an den Wälzkörper laufenden Hohlkehle ausgeführt ist und der Zahnkopf in Zahnlängsrichtung eine in Arbeitsstellung der Räder im Wesentlichen äquidistant zum Zahngrund des Gegenrades ausgebildete Form besitzt.

Weiterhin zeigt die Druckschrift DE 2 053 789 A ein verstärktes Zahnrad, welches über einen Zahnradkörper sowie in Umfangsabständen verteilte Zahnradzähne, deren Füße mit dem Zahnradkörper verbunden sind, verfügt, wobei zwischen den Zähnen in Umfangsabständen verteilte Tröge oder Lücken vorgesehen sind. Weiterhin weist das Zahnrad Verstärkungsabschnitte auf, die in die Zahnlücken von mindestens einem Ende des Zahnradkörpers aus hineinragen, sich quer zu den Zahnlücken erstrecken und benachbarte Zähne miteinander verbinden. Weitere Zahnräder sind aus den Druckschriften US 4,677,870 und CA 614844 A bekannt.

Es ist Aufgabe der Erfindung, ein Zahnrad für ein Zahnelementgetriebe vorzuschlagen, welches gegenüber bekannten Zahnrädern Vorteile aufweist, insbesondere über eine deutlich längere Lebensdauer verfügt und/oder - aufgrund einer höheren Festigkeit - die Übertragung eines größeren Drehmoments beziehungsweise einer größeren Kraft ermöglicht.

Dies wird erfindungsgemäß mit einem Zahnrad für ein Zahnelementgetriebe mit den Merkmalen des Anspruchs 1 erreicht. Dabei ist vorgesehen, dass Zähne der Zahnradverzahnung mit in Umfangsrichtung bezüglich einer Zahnraddrehachse des Zahnrads wechselseitig auf unterschiedlichen Seiten angeordneten, Zahnzwischenräume in axialer Richtung begrenzenden Stützwänden verbunden sind, sodass der jeweilige Zahnzwischenraum auf einer der jeweiligen Stützwand in axialer Richtung gegenüberliegenden Seite unter Bildung einer Mündungsöffnung randoffen ist, die in Umfangsrichtung jeweils zwischen zwei der Stützwände angeordnet ist.

Das Zahnrad ist vorzugsweise Bestandteil des Zahnelementgetriebes, welches zusätzlich zu dem Zahnrad über ein Zahnelement verfügt. Das Zahnrad weist die Zahnradverzahnung auf, das Zahnelement hingegen die Zahnelementverzahnung. Im Rahmen des Zahnelementgetriebes kämmen das Zahnrad und das Zahnelement miteinander. In anderen Worten greifen die Zahnradverzahnung und die Zahnelementverzahnung zur Drehmomentübertragung beziehungsweise zur Kraftübertragung ineinander ein. Das Zahnelementgetriebe liegt beispielsweise in Form eines Fensterbeschlaggetriebes vor und bildet insoweit einen Bestandteil eines Fensterbeschlags. Der Fensterbeschlag dient zur Betätigung eines Fensters. Beispielsweise ist bei einer ersten Einstellung des Fensterbeschlags das Fenster verriegelt und bei einer zweiten Einstellung entriegelt.

Insbesondere im Falle seiner Ausgestaltung als Fensterbeschlaggetriebe dient das Zahnelementgetriebe vorzugsweise einer Umwandlung einer Drehbewegung in eine lineare Bewegung oder umgekehrt. Beispielsweise liegt hierbei das Zahnelement als Zahnstange vor. Mit der im Rahmen dieser Beschreibung erläuterten Ausgestaltung des Zahnrads und des Zahnelements beziehungsweise des Zahnelementgetriebes wird eine deutlich längere Lebensdauer erzielt. So wurde bei Versuchen festgestellt, dass ein herkömmliches Zahnrad eine Lebensdauer von etwa 10.000 Zyklen aufweist. Wird das erfindungsgemäße Zahnrad verwendet, vorzugsweise im Rahmen des Zahnelementgetriebes, so wird eine Lebensdauer von mehr als 25.000 Zyklen erzielt. Unter einem Zyklus ist hierbei ein Entriegeln des Fensters und ein anschließendes Verriegeln des Fensters zu verstehen, also ein Wechsel aus der ersten Einstellung in die zweite Einstellung und zurück in die erste Einstellung. Zudem kann aufgrund einer höheren Festigkeit des Zahnrads und/oder des Zahnelements ein größeres Drehmoment beziehungsweise eine größere Kraft übertragen werden.

Die längere Lebensdauer des Zahnrads beziehungsweise die höhere Festigkeit werden mithilfe der Stützwände erzielt, die sich zwischen den Zähnen der Zahnradverzahnung in Umfangsrichtung erstrecken und über die sich die Zähne gegenseitig abstützen. Die Zähne der Zahnradverzahnung sind in Umfangsrichtung gleichmäßig beabstandet an dem Zahnrad beziehungsweise an dem Grundelement des Zahnrads angeordnet und/oder ausgebildet. Jeweils zwei der Zähne begrenzen einen Zahnzwischenraum in Umfangsrichtung. Dieser Zahnzwischenraum soll nun in axialer Richtung auf jeweils genau einer Seite des Zahnrads von einer der Stützwände begrenzt sein, wobei die axiale Richtung, in die die Begrenzung erfolgt, für in Umfangsrichtung unmittelbar benachbarte der Zahnzwischenräume verschieden ist. Unter den unmittelbar benachbarten Zahnzwischenräumen sind solche Zahnzwischenräume zu verstehen, die lediglich von einem Zahn der Zahnradverzahnung separiert sind.

Die Stützwände sind in anderen Worten in Umfangsrichtung wechselseitig auf unterschiedlichen (axialen) Seiten des Zahnrads angeordnet. Noch anders ausgedrückt liegt die entsprechende Stützwand für einen ersten der Zahnzwischenräume auf einer ersten Seite einer senkrecht auf der Zahnraddrehachse stehenden gedachten Ebene vor, wohingegen sie für einen in Umfangsrichtung unmittelbar benachbart zu dem ersten Zahnzwischenraum angeordneten zweiten Zahnzwischenraum auf einer der ersten Seite gegenüberliegenden zweiten Seite der gedachten Ebene angeordnet ist. Jeder der Zahnzwischenräume der Zahnradverzahnung ist insoweit in axialer Richtung auf einer Seite von einer der Stützwände begrenzt und auf der gegenüberliegenden Seite randoffen, sodass die jeweilige Mündungsöffnung vorliegt. Jedem der Zahnzwischenräume ist also eine der Stützwände und eine der Mündungsöffnungen zugeordnet.

Jede der Mündungsöffnungen liegt in Umfangsrichtung gesehen jeweils zwischen zwei der Stützwände. In anderen Worten verläuft eine gedachte Ebene, die die jeweilige Mündungsöffnung in sich aufnimmt, durch zwei Stützwände, die den jeweils unmittelbar benachbarten Zahnzwischenräumen zugeordnet sind. Unmittelbar aneinandergrenzende Zahnzwischenräume weisen insoweit in axialer Richtung auf gegenüberliegenden Seiten ihre Mündungsöffnungen auf. Jeder der Zahnzwischenräume wird in Umfangsrichtung von zwei Zähnen der Zahnradverzahnung und in axialer Richtung von einer der Stützwände begrenzt. Die jeden der Zahnzwischenräume begrenzenden Zähne und die dazugehörige Stützwand sind gemeinsam im Wesentlichen U-förmig angeordnet, wobei die Zähne zwei Schenkel der U-Form bilden, die von einem von der Stützwand gebildeten Schenkel miteinander verbunden sind. In Umfangsrichtung wechselt sich die Ausrichtung der U-Formen wechselseitig ab. So ist die U-Form abwechselnd in axialer Richtung in die eine und in die andere Richtung geöffnet beziehungsweise randoffen ausgebildet.

Besonders bevorzugt ist eine den jeweiligen Zahnzwischenraum in axialer Richtung begrenzende Innenseite jeder der Stützwände bezüglich der Zahnraddrehachse beziehungsweise einer die Zahnraddrehachse aufnehmenden gedachten Ebene angewinkelt, schließt also mit ihr einen Winkel ein, der größer als 0° und kleiner als 180° ist. In anderen Worten ist die dem Zahnzwischenraum zugewandte Seite der jeweiligen Stützwand in radialer Richtung nach außen gesehen in axialer Richtung von der jeweils gegenüberliegenden Mündungsöffnung fort geneigt, sodass die Abmessungen des Zahnzwischenraums in axialer Richtung an derselben Position in Umfangsrichtung in radialer Richtung nach außen zunehmen. Mit einer derartigen Ausgestaltung der Stützwände wird eine besonders lange Lebensdauer beziehungsweise die höhere Festigkeit umgesetzt.

Die beschriebene Ausgestaltung des Zahnrads ermöglicht eine besonders lange Lebensdauer und/oder die Übertragung des größeren Drehmoments beziehungsweise der größeren Kraft wegen der höheren Festigkeit, nämlich aufgrund der Stützwirkung der Stützwände. Dies ist insbesondere der Fall, falls das mit dem Zahnrad zusammenwirkende Zahnelement an wenigstens einem der Zähne in axialer Richtung in Überdeckung mit der an diesen Zahn angrenzenden Stützwand angreift. Die Zähne der Zahnelementverzahnung erstrecken sich insoweit bis in die Mündungsöffnung des jeweiligen Zahnzwischenraums der Zahnradverzahnung hinein, sodass sie sich über den jeweiligen Zahn an der entsprechenden Stützwand abstützen.

Beispielsweise besteht das Zahnrad aus Metall, insbesondere aus einer Zinklegierung, welche mittels Zinkdruckguss verarbeitet wird. Besonders bevorzugt wird das Zahnrad unmittelbar durch Zinkdruckguss ausgebildet. Das Zahnrad kann alternativ aus einem anderen Material beziehungsweise Werkstoff bestehen, zum Beispiel aus Kunststoff, vorzugsweise faserverstärktem Kunststoff, insbesondere glasfaserverstärktem oder kohlefaserverstärktem Kunststoff. Auch andere Materialien sind jedoch heranziehbar. Beispielsweise bestehen das Zahnrad und das Zahnelement aus demselben Material. Sie können jedoch auch aus unterschiedlichen Materialien bestehen, beispielsweise das Zahnrad aus Metall und das Zahnelement aus Kunststoff oder umgekehrt.

Im Rahmen einer bevorzugten Ausgestaltung der Erfindung ist vorgesehen, dass das Zahnrad ein Stirnrad ist und die Zahnradverzahnung als Geradverzahnung vorliegt. Unter dem Stirnrad ist ein Zahnrad zu verstehen, welches einen kreiszylindrischen Grundkörper aufweist, von dessen Mantelfläche die Zähne der Zahnradverzahnung ausgehen und sich in radialer Richtung bezüglich der Zahnraddrehachse nach außen erstrecken. Die Zahnradverzahnung ist vorzugsweise als Geradverzahnung ausgestaltet, also als achsparallele Verzahnung. Auch eine Schrägverzahnung kann jedoch realisiert sein. Die Ausgestaltung des Zahnrads als Stirnrad und der Zahnradverzahnung als Geradverzahnung stellt zum einen eine einfache und kostengünstige Herstellung sicher und ermöglicht zum anderen die vorstehend bereits erwähnte lange Lebensdauer und/oder höhere Festigkeit.

Im Rahmen einer weiteren Ausgestaltung der Erfindung ist vorgesehen, dass die Zähne der Zahnradverzahnung in axialer Richtung miteinander fluchten und jeweils zwei der Zähne einen der Zahnzwischenräume in Umfangsrichtung begrenzen, wobei ein erster der Zahnzwischenräume und ein in Umfangsrichtung unmittelbar benachbart zu dem ersten Zahnzwischenraum vorliegender zweiter der Zahnzwischenräume auf unterschiedlichen Seiten einer senkrecht auf der Zahnraddrehachse stehenden gedachten Ebene in axialer Richtung von einer der Stützwände begrenzt und in die gegenüberliegende Richtung randoffen sind. Die Zähne der Zahnradverzahnung liegen insoweit zwischen zwei gedachten parallelen Ebenen, die jeweils senkrecht auf der Zahnraddrehachse stehen. Jeder der Zähne erstreckt sich von einer der Ebenen bis hin zu der jeweils anderen der Ebenen. Entsprechend fluchten die Zähne der Zahnradverzahnung in axialer Richtung miteinander.

Wie bereits erläutert, begrenzen jeweils zwei der Zähne einen in Umfangsrichtung, sodass insgesamt mehrere Zahnzwischenräume vorliegen, nämlich zumindest der erste Zahnzwischenraum und der zweite Zahnzwischenraum. Diese sind in Umfangsrichtung unmittelbar benachbart zueinander angeordnet. Hierunter ist zu verstehen, dass zwischen dem ersten Zahnzwischenraum und dem zweiten Zahnzwischenraum kein weiterer Zahnzwischenraum vorliegt, sondern lediglich ein Zahn der Zahnradverzahnung, der die beiden Zahnzwischenräume in unterschiedliche Richtungen in Umfangsrichtung begrenzt.

Die beiden Zahnzwischenräume, also der erste Zahnzwischenraum und der zweite Zahnzwischenraum, weisen auf gegenüberliegenden Seiten in axialer Richtung die jeweilige Stützwand auf. Entsprechend liegt die den ersten Zahnzwischenraum begrenzende Stützwand auf einer ersten Seite der gedachten Ebene und die den zweiten Zahnzwischenraum begrenzende Stützwand auf einer der ersten Seite gegenüberliegenden zweiten Seite der gedachten Ebene vor. Die Ebene ist beispielsweise in axialer Richtung mittig der Zähne angeordnet und steht senkrecht auf der Zahnraddrehachse. Die Mündungsöffnungen des ersten Zahnzwischenraums und des zweiten Zahnzwischenraums sind analog auf gegenüberliegenden Seiten der gedachten Ebene angeordnet; die Mündungsöffnung des ersten Zahnzwischenraums also auf der zweiten Seite der Ebene und die Mündungsöffnung des zweiten Zahnzwischenraums auf der ersten Seite der Ebene. Mit einer derartigen Ausgestaltung des Zahnrads wird eine besonders einfache Herstellung sichergestellt und gleichzeitig die lange Lebensdauer und/oder hohe Festigkeit erzielt.

Eine besonders bevorzugte weitere Ausführungsform der Erfindung sieht vor, dass ein erster Teil der Stützwände in einer auf der Zahnraddrehachse senkrecht stehenden ersten Ebene und ein zweiter Teil der Stützwände in einer beabstandet von der ersten Ebene angeordneten und auf der Zahnraddrehachse senkrecht stehenden zweiten Ebene angeordnet sind. Der erste Teil und der zweite Teil umfassen jeweils wenigstens eine der Stützwände. Vorzugsweise umfassen der erste Teil und der zweite Teil jeweils die Hälfte der Stützwände. Die Stützwände, die dem ersten Teil zugeordnet sind, und die Stützwände, die dem zweiten Teil zugeordnet sind, sind in Umfangsrichtung abwechselnd in axialer Richtung auf gegenüberliegenden Seiten des Zahnrads angeordnet.

Hierbei werden die dem ersten Teil zugeordneten Stützwände von der ersten Ebene und die dem zweiten Teil zugeordneten Stützwände von der zweiten Ebene geschnitten, vorzugsweise jeweils in axialer Richtung mittig. Die erste Ebene und die zweite Ebene sind in axialer Richtung beabstandet angeordnet und stehen jeweils senkrecht auf der Zahnraddrehachse. Diese Definition der Anordnung der Stützwände kann zusätzlich oder alternativ zu den im Rahmen dieser Beschreibung erläuterten weiteren Definitionen herangezogen werden. Auch mit einer derartigen Ausgestaltung des Zahnrads sind eine einfache und kostengünstige Herstellung sowie gleichzeitig die lange Lebensdauer und/oder die hohe Festigkeit realisierbar.

Eine bevorzugte Ausgestaltung der Erfindung sieht vor, dass jeder der Stützwände in jeden der von ihr verbundenen Zähne über einen gekrümmten Übergang übergeht. Im Rahmen dieser Beschreibung werden die Stützwände zwar separat von den Zähnen der Zahnradverzahnung beschrieben, vorzugsweise sind sie jedoch einstückig und/oder materialeinheitlich mit den Zähnen ausgestaltet. Bevorzugt sind sowohl die Stützwände als auch die Zähne der Zahnradverzahnung zusätzlich mit einem Grundkörper des Zahnrads einstückig und/oder materialeinheitlich ausgeführt. Um eine besonders hohe Dauerfestigkeit des Zahnrads zu erzielen, gehen die Stützwände über gekrümmte Übergänge in die Zähne über. Jede der Stützwände ist also über einen ersten Übergang mit einem ersten der Zähne und über einen zweiten Übergang mit einem zweiten der Zähne unmittelbar verbunden. Der gekrümmte Übergang weist beispielsweise einen Radius auf, welcher in radialer Richtung nach außen konstant ist oder - alternativ - größer wird.

Eine weitere Ausführungsform der Erfindung sieht vor, dass die Zahnradverzahnung lediglich über einen Teil des Umfangs des Zahnrads ausgebildet ist. In anderen Worten liegt die Verzahnung lediglich als Teilverzahnung vor, welche sich beispielsweise in Umfangsrichtung über einen Winkel von höchstens 270°, höchstens 180°, höchstens 150°, höchstens 120° oder höchstens 90° erstreckt. Insbesondere im Falle der Verwendung des Zahnrads in einem Fensterbeschlaggetriebe ist eine Ausgestaltung der Zahnradverzahnung über den gesamten Umfang des Zahnrads für einen ordnungsgemäßen Betrieb des Fensterbeschlaggetriebes nicht notwendig. Entsprechend kann, vor allem aus Kostengründen, auf die Ausbildung der Zahnradverzahnung über den gesamten Umfang des Zahnrads verzichtet werden.

Schließlich kann im Rahmen einer besonders bevorzugten Ausführungsform der Erfindung vorgesehen sein, dass das Zahnrad eine Mehrkantaufnahme aufweist. Die Mehrkantaufnahme ist beispielsweise in dem Grundkörper des Zahnrads ausgestaltet und dient der Aufnahme eines Mehrkantstabs. Die Mehrkantaufnahme liegt beispielsweise als Vierkantaufnahme vor. Beispielsweise verfügt ein Fenstergriff des Fensterbeschlaggetriebes über einen mit der Mehrkantaufnahme korrespondierenden Mehrkant, sodass der Griff durch Einstecken des Mehrkants in die Mehrkantaufnahme in Umfangsrichtung formschlüssig mit dem Zahnrad gekoppelt werden kann. Die Ausgestaltung der Mehrkantaufnahme unmittelbar an dem Zahnrad ermöglicht das unmittelbare Angreifen an dem Zahnrad mittels des Mehrkants, beispielsweise mittels des Griffs des Fensterbeschlags.

Die Erfindung betrifft weiterhin ein Zahnelement für ein Zahnelementgetriebe, mit einer Zahnelementverzahnung. Dabei ist vorgesehen, dass Zähne der Zahnelementverzahnung in eine Richtung wechselseitig versetzt angeordnet sind, sodass jeweils zwei der Zähne auf gegenüberliegenden Seiten eines weiteren der Zähne angeordnet sind und miteinander fluchten. Das Zahnelement ist vorzugsweise Bestandteil des Zahnelementgetriebes und wirkt hierbei mit dem Zahnrad zusammen, welches vorzugsweise gemäß den Ausführungen im Rahmen dieser Beschreibung ausgestaltet ist. Zur Erzielung einer langen Lebensdauer und/oder einer hohen Festigkeit des Zahnelements sind die Zähne der Zahnelementverzahnung in einer Richtung, nämlich vorzugsweise in axialer Richtung bezüglich der Zahnraddrehachse, wechselseitig versetzt angeordnet. Das bedeutet, dass unmittelbar nebeneinander angeordnete Zähne in dieser Richtung, beispielsweise in axialer Richtung, zwar in Überdeckung zueinander angeordnet sind, jedoch nicht miteinander fluchten.

Die wechselseitig versetzte Anordnung der Zähne ist vorzugsweise derart gewählt, dass der auf einen der Zähne folgende übernächste der Zähne mit dem erstgenannten Zahn fluchtet, also in wenigstens einer Richtung mit diesem in Überdeckung vorliegt. Die Zähne der Zahnelementverzahnung können insoweit in einen ersten Teil und einen zweiten Teil aufgeteilt werden, wobei jedem der Teile jeweils die Hälfte der Zähne zugeordnet ist. Die Zähne des ersten Teils und die Zähne des zweiten Teils sind abwechselnd und in der bezeichneten Richtung wechselseitig versetzt angeordnet. Die dem ersten Teil zugeordneten Zähne fluchten miteinander, ebenso fluchten die dem zweiten Teil zugeordneten Zähne miteinander. Insbesondere ist es vorgesehen, dass alle Zähne der Zahnelementverzahnung gleichmäßig auf den ersten Teil und den zweiten Teil aufgeteilt sind, und dass alle Zähne des ersten Teils miteinander fluchten und alle Zähne des zweiten Teils miteinander fluchten.

Ein derartiges Zahnelement ist besonders bevorzugt einsetzbar zusammen mit dem Zahnrad gemäß der vorliegenden Beschreibung. Bei einem Kämmen des Zahnrads und des Zahnelements miteinander greifen vorzugsweise die Zähne der Zahnelementverzahnung derart in die Zahnzwischenräume der Zahnradverzahnung ein, dass sie in der Mündungsöffnung vorliegen beziehungsweise jeweils zwischen zwei der Stützwände des Zahnrads angeordnet sind. Entsprechend stützt sich ein Zahn der Zahnradverzahnung, welcher von einem Zahn der Zahnelementverzahnung kraftbeaufschlagt wird, über die von ihm ausgehende Stützwand an einem in Umfangsrichtung auf den Zahn folgenden der Zähne der Zahnradverzahnung ab. Somit wird eine besonders lange Lebensdauer des Zahnelements und des Zahnrads und/oder die hohe Festigkeit erzielt.

Eine weitere Ausgestaltung der Erfindung sieht vor, dass die Zähne abwechselnd angeordnete erste Zähne und zweite Zähne aufweisen, wobei die ersten Zähne in einer Richtung jeweils in einer gedachten ersten Begrenzungsebene beginnen und sich bis zu einer zu der ersten Begrenzungsebene parallelen gedachten weiteren ersten Begrenzungsebene erstrecken und die zweiten Zähne in einer Richtung jeweils in einer gedachten zweiten Begrenzungsebene beginnen und sich bis zu einer zu der zweiten Begrenzungsebene parallelen gedachten weiteren Begrenzungsebene erstrecken, und wobei die erste Begrenzungsebene beabstandet von den zweiten Zähnen sowie die zweite Begrenzungsebene beabstandet von den ersten Zähnen verläuft und die weitere erste Begrenzungsebene die zweiten Zähne und die weitere zweite Begrenzungsebene die ersten Zähne schneidet.

Die Zähne der Zahnelementverzahnung werden vorzugsweise vollständig in die ersten Zähne und die zweiten Zähne aufgeteilt, insbesondere gleichmäßig. Alle ersten Zähne erstrecken sich ausgehend von der ersten Begrenzungsebene bis hin zu der weiteren ersten Begrenzungsebene und enden dort. Zudem erstrecken sich alle zweiten Zähne ausgehend von der zweiten Begrenzungsebene bis hin zu der weiteren zweiten Begrenzungsebene und enden ebenfalls dort. Die erste Begrenzungsebene und die weitere erste Begrenzungsebene sind parallel zueinander angeordnet. Auch die zweite Begrenzungsebene und die weitere zweite Begrenzungsebene sind parallel zueinander angeordnet. Vorzugsweise sind die erste Begrenzungsebene und die zweite Begrenzungsebene ebenfalls parallel zueinander angeordnet. Die Begrenzungsebenen, also die erste Begrenzungsebene, die weitere erste Begrenzungsebene, die zweite Begrenzungsebene sowie die weitere zweite Begrenzungsebene, stehen vorzugsweise senkrecht auf der Zahnraddrehachse des Zahnrads, sofern das Zahnrad und das Zahnelement miteinander kämmen.

Die erste Begrenzungsebene verläuft beabstandet von den zweiten Zähnen, ebenso die zweite Begrenzungsebene von den ersten Zähnen. Insbesondere liegt hierbei ein Abstand in axialer Richtung bezüglich der Zahnraddrehachse vor. Die weitere erste Begrenzungsebene schneidet hingegen die zweiten Zähne und die weitere zweite Begrenzungsebene die ersten Zähne, läuft also durch diese hindurch. Entsprechend ist die wechselseitig versetzte Anordnung der Zähne der Zahnelementverzahnung gemäß den Ausführungen im Rahmen dieser Beschreibung erzielt.

Eine weitere bevorzugte Ausführungsform der Erfindung sieht vor, dass die ersten Zähne auf ihren zwischen zweiten Zähnen liegenden Ende stärker gerundet sind als auf ihrem gegenüberliegenden Ende, und/oder dass die zweiten Zähne auf ihren zwischen ersten Zähne liegenden Ende stärker gerundet sind als auf ihrem gegenüberliegenden Ende. Jeder erste Zahn hat ein bei Betrachtung in axialer Richtung zwischen zwei zweiten Zähnen liegendes Ende und ein in axialer Richtung beabstandet von den zweiten Zähnen liegendes Ende. Umgekehrt weist jeder zweite Zahn ein zwischen zwei ersten Zähnen liegendes Ende und ein von den ersten Zähnen in axialer Richtung beabstandetes Ende auf.

Beispielsweise sind die Zähne auf ihrem gegenüberliegenden Ende plan, eine jeden Zahn begrenzende Seitenfläche liegt also größtenteils oder sogar vollständig in einer gedachten Ebene, welche bevorzugt auf der Zahnraddrehachse senkrecht steht. Das zwischen den anderen Zähnen liegende Ende der Zähne ist hingegen gerundet, beispielsweise nimmt die Zahnhöhe in Richtung dieses Endes ab. Zusätzlich oder alternativ kann eine Zahnbreite in dieser Richtung abnehmen. Mit einer derartigen Ausgestaltung der Zähne wird eine besonders vorteilhafte Anpassung an die Zahnzwischenräume der Zahnradverzahnung und insbesondere an die diese in axialer Richtung begrenzenden Stützwände erzielt.

Schließlich kann im Rahmen einer weiteren bevorzugten Ausgestaltung vorgesehen sein, dass das Zahnelement als Zahnrad oder als Zahnstange vorliegt. Durch die Ausgestaltung als Zahnrad beziehungsweise weiteres Zahnrad kann ein Zahnelementgetriebe geschaffen werden, welches besonders hervorragend zur Übertragung eines Drehmoments geeignet ist. Liegt das Zahnelement hingegen als Zahnstange vor, so kann durch das Zusammenwirken des Zahnrads und des Zahnelements im Rahmen des Zahnelementgetriebes eine Umwandlung einer Drehbewegung in eine lineare Bewegung oder umgekehrt erzielt sein.

Die Erfindung betrifft weiterhin ein Zahnelementgetriebe mit einem Zahnrad, insbesondere einem Zahnrad gemäß den Ausführungen im Rahmen dieser Beschreibung, und einem Zahnelement, insbesondere einem Zahnelement gemäß den Ausführungen im Rahmen dieser Beschreibung, wobei eine Zahnradverzahnung des Zahnrads und eine Zahnelementverzahnung des Zahnelements miteinander in Eingriff stehen. Dabei ist vorgesehen, dass Zähne der Zahnradverzahnung mit in Umfangsrichtung wechselseitig auf unterschiedlichen Seiten angeordneten, Zahnzwischenräume in axialer Richtung begrenzenden Stützwänden verbunden sind, sodass der jeweilige Zahnzwischenraum auf einer der jeweiligen Stützwand in axialer Richtung gegenüberliegenden Seite unter Bildung einer Mündungsöffnung randoffen ist, die in Umfangsrichtung jeweils zwischen zwei der Stützwände angeordnet ist, und/oder dass Zähne der Zahnelementverzahnung wechselseitig in axialer Richtung versetzt angeordnet sind, sodass jeweils zwei der Zähne auf gegenüberliegenden Seiten eines weiteren der Zähne angeordnet sind und in wenigstens einer Richtung miteinander fluchten.

Auf die Vorteile einer derartigen Ausgestaltung des Zahnrads, des Zahnelements sowie des Zahnelementgetriebes wurde bereits hingewiesen. Sowohl das Zahnrad, das Zahnelement als auch das Zahnelementgetriebe können gemäß den Ausführungen im Rahmen dieser Beschreibung weitergebildet sein, sodass insoweit auf diese verwiesen wird.

Eine bevorzugte Ausgestaltung der Erfindung sieht eine Ausgestaltung des Zahnelementgetriebes als Fensterbeschlaggetriebe vor. Hierauf wurde vorstehend bereits hingewiesen. Das Fensterbeschlaggetriebe ist Bestandteil eines Fensterbeschlags, welches an einem Fenster zu dessen Betätigung angeordnet ist. Die Verwendung des beschriebenen Zahnelementgetriebes als Fensterbeschlaggetriebe ermöglicht eine besonders lange Lebensdauer und/oder die Übertragung eines großen Drehmoments beziehungsweise einer großen Kraft. Auch hierauf wurde bereits eingegangen.

Eine weitere Ausführungsform der Erfindung sieht vor, dass das Zahnelement mit einer Schubstange eines Fensterbeschlags gekoppelt ist. Der Fensterbeschlag weist das Zahnelementgetriebe in Form des Fensterbeschlaggetriebes auf. Über die Schubstange ist das Zahnelement mit wenigstens einem Schließzapfen gekoppelt, welcher mit einem Schließblech zum Verriegeln des Fensters zusammenwirken kann. Bei der ersten Einstellung des Zahnelementgetriebes greift beispielsweise der Schließzapfen in das Schließblech ein, sodass das Fenster verriegelt ist. Liegt hingegen die zweite Einstellung vor, so liegt der Schließzapfen außer Eingriff mit dem Schließblech vor, sodass das Fenster entriegelt ist.

Schließlich kann im Rahmen einer weiteren bevorzugten Ausgestaltung der Erfindung vorgesehen sein, dass das Zahnrad und das Zahnelement in einem gemeinsamen Getriebegehäuse angeordnet sind. Das Getriebegehäuse stellt ein Gehäuse des Fensterbeschlaggetriebes dar. Die gemeinsame Anordnung von Zahnrad und Zahnelement in dem Getriebegehäuse ermöglicht eine kompakte und vorteilhafte Ausgestaltung des Zahnelementgetriebes.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: ein Zahnelementgetriebe mit einem Zahnrad und einem Zahnelement,
- Figur 2: eine schematische Detaildarstellung des Zahnrads,
- Figur 3: eine schematische Detaildarstellung des Zahnelements, sowie
- Figur 4: eine schematische Darstellung des als Fensterbeschlaggetriebe ausgestalteten Zahn-elementgetriebes .

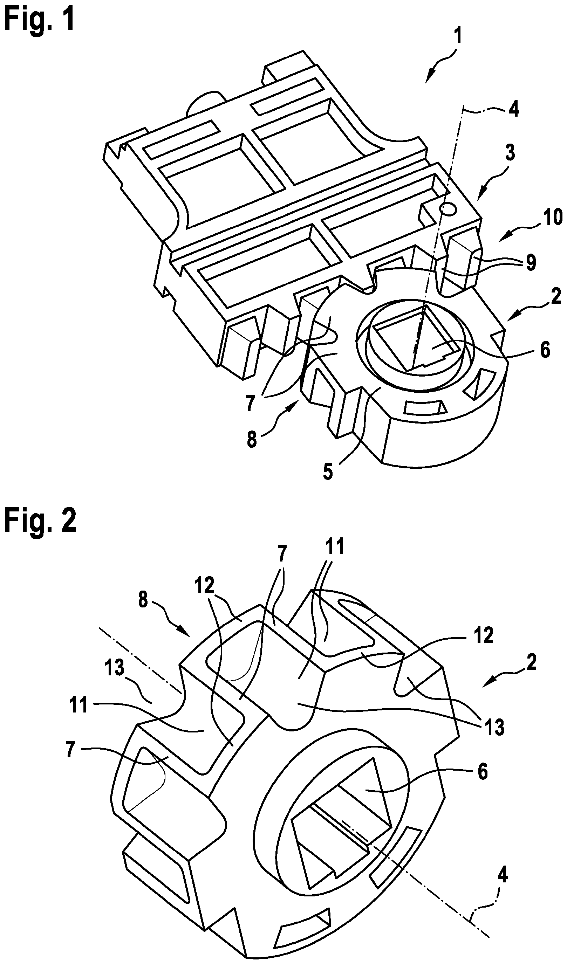

Die Figur 1 zeigt eine schematische Darstellung eines Zahnelementgetriebes 1, das ein Zahnrad 2 sowie ein als Zahnstange ausgebildetes Zahnelement 3 aufweist. Das Zahnrad 2 ist um eine Zahnraddrehachse 4 drehbar gelagert, das Zahnelement 3 ist linear verlagerbar gelagert. Das Zahnrad 2 weist einen Grundkörper 5 auf, in welchem eine Mehrkantaufnahme 6 ausgebildet ist. Von dem Grundkörper 5 gehen Zähne 7 einer Zahnradverzahnung 8 aus, von welchen lediglich einige beispielhaft gekennzeichnet sind. Es ist erkennbar, dass sich die Zahnradverzahnung 8 in Umfangsrichtung lediglich über einen Teil des Zahnrads 2 erstreckt. Die Zähne 7 der Zahnradverzahnung 8 stehen mit Zähnen 9 einer Zahnelementverzahnung 10 zumindest teilweise in Eingriff. Die Zähne 9 sind lediglich teilweise und beispielhaft gekennzeichnet.

Die Figur 2 zeigt eine schematische Detaildarstellung des Zahnrads 2. Zu erkennen sind deutlich die Zähne 7 der Zahnradverzahnung 8. Jeweils zwei der Zähne 7 begrenzen in Umfangsrichtung gesehen einen Zahnzwischenraum 11. Auch die Zahnzwischenräume 11 sind lediglich teilweise gekennzeichnet. Die Zahnzwischenräume 11 sind jeweils in axialer Richtung einerseits von einer Stützwand 12 begrenzt und andererseits unter Bildung einer Mündungsöffnung 13 randoffen ausgebildet. Die Stützwände 12 sind hierbei für unmittelbar benachbarte Zahnzwischenräume 11 in axialer Richtung bezüglich der Zahnraddrehachse 4 auf gegenüberliegenden Seiten angeordnet. Insoweit liegen die Stützwände 12 in Umfangsrichtung wechselseitig auf unterschiedlichen Seiten in axialer Richtung an dem Zahnrad 2 vor.

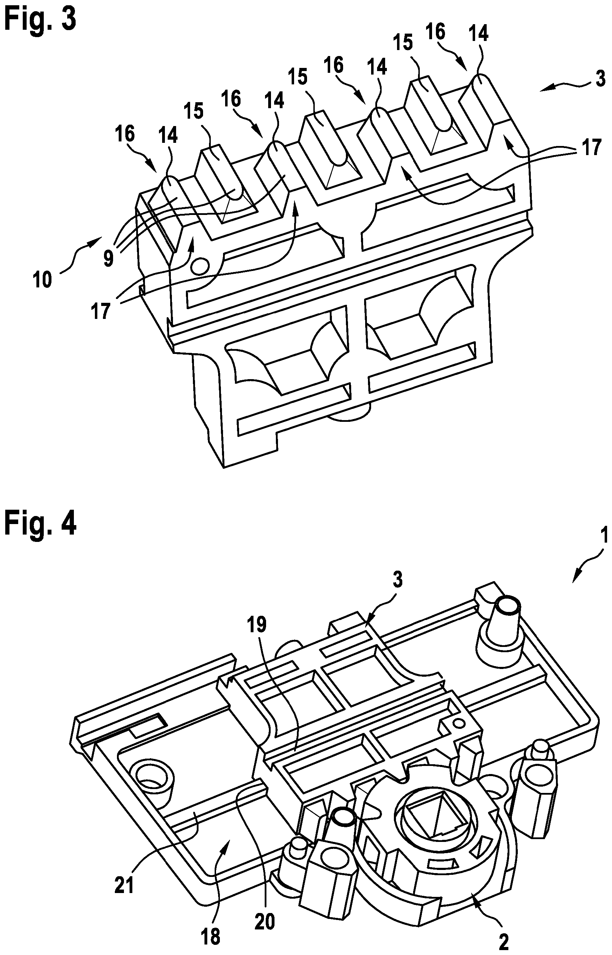

Die Figur 3 zeigt das als Zahnstange ausgebildete Zahnelement in schematischer Detaildarstellung. Es ist erkennbar, dass die Zähne 9 der Zahnelementverzahnung 10 in einer Richtung, nämlich in Längsrichtung des Zahnelements 3 wechselseitig versetzt angeordnet sind. Das bedeutet, dass jeweils zwei der Zähne 9, die auf gegenüberliegenden Seiten eines weiteren der Zähne 9 angeordnet sind, miteinander fluchten. Es wird deutlich, dass die Zähne 9 in erste Zähne 14 und zweite Zähne 15 unterteilbar sind. Die ersten Zähne 14 und die zweiten Zähne 15 sind jeweils abwechselnd angeordnet. Hierbei fluchten die ersten Zähne 14 miteinander. Ebenso fluchten die zweiten Zähne 15 miteinander. Die ersten Zähne 14 sind zudem auf ihrem zwischen zweiten Zähnen 15 liegenden Ende 16 stärker gerundet als auf ihrem gegenüberliegenden Ende 17. Entsprechendes gilt für die zweiten Zähne 15.

Die Figur 4 zeigt eine schematische Darstellung einer Ausgestaltung des Zahnelementgetriebes 1 als Fensterbeschlaggetriebe. Zu erkennen sind das Zahnrad 2 sowie das Zahnelement 3, die in einem hier lediglich teilweise dargestellten Getriebegehäuse 18 angeordnet sind. Es wird deutlich, dass das Zahnelement 3 Führungsnuten 19 und 20 aufweist, die auf gegenüberliegenden Seiten ausgebildet sind. Jeder dieser Führungsnuten 19 und 20 ist ein Führungsvorsprung 21 des Getriebegehäuses 18 zugeordnet. Der jeweilige Führungsvorsprung 21 ist in der Führungsnut 19 beziehungsweise 20 zur linearen Führung des Zahnelements 3 angeordnet.

Die beschriebene Ausgestaltung des Zahnelementgetriebes 1 hat den Vorteil, dass mit einer vergleichsweise einfachen konstruktiven Ausgestaltung eine deutliche Verlängerung der Lebensdauer im Vergleich mit einem herkömmlichen Zahnrad und einer herkömmlichen Zahnstange erzielt wird. Versuche haben ergeben, dass die Lebensdauer im Vergleich mit diesen mindestens doppelt so hoch sein kann. Zusätzlich oder alternativ wird aufgrund der höheren Festigkeit das übertragbare Drehmoment beziehungsweise die übertragbare Kraft erhöht.

## Patentansprüche

1. Zahnrad (2) für ein Zahnelementgetriebe (1), mit einer Zahnradverzahnung (8), **dadurch gekennzeichnet, dass** Zähne (7) der Zahnradverzahnung (8) mit in Umfangsrichtung bezüglich einer Zahnraddrehachse (4) des Zahnrads (2) wechselseitig auf unterschiedlichen Seiten angeordneten, Zahnzwischenräume (11) in axialer Richtung begrenzenden Stützwänden (12) verbunden sind, sodass der jeweilige Zahnzwischenraum (11) auf einer der jeweiligen Stützwand (12) in axialer Richtung gegenüberliegenden Seite unter Bildung einer Mündungsöffnung (13) randoffen ist, die in Umfangsrichtung jeweils zwischen zwei der Stützwände (12) angeordnet ist.

2. Zahnrad nach Anspruch 1, **dadurch gekennzeichnet, dass** das Zahnrad (2) ein Stirnrad ist und die Zahnradverzahnung (8) als Geradverzahnung vorliegt.

3. Zahnrad nach einem der vorhergehenden Ansprüche, **dadurch gekennzeichnet, dass** die Zähne (7) der Zahnradverzahnung (8) in axialer Richtung miteinander fluchten und jeweils zwei der Zähne (7) einen der Zahnzwischenräume (11) in Umfangsrichtung begrenzen, wobei ein erster der Zahnzwischenräume (11) und ein in Umfangsrichtung unmittelbar benachbart zu dem ersten Zahnzwischenraum (11) vorliegender zweiter der Zahnzwischenräume (11) auf unterschiedlichen Seiten einer senkrecht auf der Zahnraddrehachse (4) stehenden gedachten Ebene in axialer Richtung von einer der Stützwände (12) begrenzt und in die gegenüberliegende Richtung randoffen sind.

4. Zahnrad nach einem der vorhergehenden Ansprüche, **dadurch gekennzeichnet, dass** ein erster Teil der Stützwände (12) in einer auf der Zahnraddrehachse (4) senkrecht stehenden ersten Ebene und ein zweiter Teil der Stützwände (12) in einer beabstandet von der ersten Ebene angeordneten und auf der Zahnraddrehachse (4) senkrecht stehenden zweiten Ebene angeordnet sind.

5. Zahnrad nach einem der vorhergehenden Ansprüche, **dadurch gekennzeichnet, dass** jede der Stützwände (12) in jeden der von ihr verbundenen Zähne (7) über einen gekrümmten Übergang übergeht.

6. Zahnrad nach einem der vorhergehenden Ansprüche, **dadurch gekennzeichnet, dass** die Zahnradverzahnung (8) lediglich über einen Teil des Umfangs des Zahnrads (2) ausgebildet ist.

7. Zahnrad nach einem der vorhergehenden Ansprüche, **gekennzeichnet durch** eine MehrkantaufNahme (6).

8. Zahnelement (3) für ein Zahnelementgetriebe (1), mit einer Zahnelementverzahnung (10), **dadurch gekennzeichnet, dass** Zähne (9) der Zahnelementverzahnung (10) in einer Richtung wechselseitig versetzt angeordnet sind, sodass jeweils zwei der Zähne (9) auf gegenüberliegenden Seiten eines weiteren der Zähne (9) angeordnet sind und miteinander fluchten.

9. Zahnelement nach Anspruch 8, **dadurch gekennzeichnet, dass** die Zähne (9) abwechselnd angeordnete erste Zähne (14) und zweite Zähne (15) aufweisen, wobei die ersten Zähne (14) in einer Richtung jeweils in einer gedachten ersten Begrenzungsebene beginnen und sich bis zu einer zu der ersten Begrenzungsebene parallelen gedachten weiteren ersten Begrenzungsebene erstrecken und die zweiten Zähne (15) in einer Richtung jeweils in einer gedachten zweiten Begrenzungsebene beginnen und sich bis zu einer zu der zweiten Begrenzungsebene parallelen gedachten weiteren zweiten Begrenzungsebene erstrecken, und wobei die erste Begrenzungsebene beabstandet von den zweiten Zähnen (15) sowie die zweite Begrenzungsebene beabstandet von den ersten Zähnen (14) verläuft und die weitere erste Begrenzungsebene die zweiten Zähne (15) und die weitere zweite Begrenzungsebene die ersten Zähne (14) schneidet.

10. Zahnelement nach einem der vorhergehenden Ansprüche, **dadurch gekennzeichnet, dass** die ersten Zähne (14) auf ihrem zwischen zweiten Zähnen (15) liegenden Ende (16) stärker gerundet sind als auf ihrem gegenüberliegenden Ende, und/oder dass die zweiten Zähne (15) auf ihrem zwischen ersten Zähnen (14) liegenden Ende stärker gerundet sind als auf ihrem gegenüberliegenden Ende.

11. Zahnelement nach einem der vorhergehenden Ansprüche, **gekennzeichnet durch** seine Ausgestaltung als Zahnrad oder als Zahnstange.

12. Zahnelementgetriebe (1) mit einem Zahnrad (2), insbesondere einem Zahnrad (2) nach einem oder mehreren der Ansprüche 1 bis 7, und einem Zahnelement (3), insbesondere einem Zahnelement (3) nach einem oder mehreren der Ansprüche 8 bis 11, wobei eine Zahnradverzahnung (8) des Zahnrads (2) und eine Zahnelementverzahnung (10) des Zahnelements (3) miteinander in Eingriff stehen, **dadurch gekennzeichnet, dass** Zähne (7) der Zahnradverzahnung (8) mit in Umfangsrichtung wechselseitig auf unterschiedlichen Seiten angeordneten, Zahnzwischenräume (11) in axialer Richtung begrenzenden Stützwänden (12) verbunden sind, sodass der jeweilige Zahnzwischenraum (11) auf einer der jeweiligen Stützwand (12) in axialer Richtung gegenüberliegenden Seite unter Bildung einer Mündungsöffnung (13) randoffen ist, die in Umfangsrichtung jeweils zwischen zwei der Stützwänden (12) angeordnet ist, und/oder dass Zähne (9) der Zahnelementverzahnung (10) wechselseitig in axialer Richtung versetzt angeordnet sind, sodass jeweils zwei der Zähne (9) auf gegenüberliegenden Seiten eines weiteren der Zähne (9) angeordnet sind und in wenigstens eine Richtung miteinander fluchten.

13. Zahnelementgetriebe nach Anspruch 12, **gekennzeichnet durch** seine Ausgestaltung als Fensterbeschlaggetriebe.

14. Zahnelementgetriebe nach einem der vorhergehenden Ansprüche, **dadurch gekennzeichnet, dass** das Zahnelement (3) mit einer Schubstange eines Fensterbeschlags gekoppelt ist.

15. Zahnelementgetriebe nach einem der vorhergehenden Ansprüche, **dadurch gekennzeichnet, dass** das Zahnrad (2) und das Zahnelement (3) in einem gemeinsamen Getriebegehäuse (18) angeordnet sind.

## Claims

1. Gear wheel (2) for a gear element transmission (1), having gear wheel toothing (8), **characterised in that** the teeth (7) of the gear wheel toothing (8) are connected to support walls (12), which are disposed in the peripheral direction with respect to a gear wheel axis of rotation (4) of the gear wheel (2) in an alternating manner on different sides and define tooth intermediate spaces (11) in the axial direction, so that the respective tooth intermediate space (11) is open at the edge on a side opposite the respective support wall (12) in the axial direction, thus forming an mouth opening (13) which is disposed between two of the support walls (12) respectively in the peripheral direction.

2. Gear wheel as claimed in claim 1, **characterised in that** the gear wheel (2) is a spur wheel and the gear wheel toothing (8) is in the form of straight toothing.

3. Gear wheel as claimed in any one of the preceding claims, **characterised in that** the teeth (7) of the gear wheel toothing (8) are aligned with each other in the axial direction and in each case two of the teeth (7) define one of the tooth intermediate spaces (11) in the peripheral direction, wherein a first one of the tooth intermediate spaces (11) and a second one of the tooth intermediate spaces (11), present immediately adjacent to the first tooth intermediate space (11) in the peripheral direction, are defined, on different sides of a notional plane perpendicular to the gear wheel axis of rotation (4) in the axial direction, by one of the support walls (12) and are open at the edge in the opposite direction.

4. Gear wheel as claimed in any one of the preceding claims, **characterised in that** a first part of the support walls (12) is disposed in a first plane perpendicular to the gear wheel axis of rotation (4) and a second part of the support walls (12) is disposed in a second plane which is disposed spaced apart from the first plane and is perpendicular to the gear wheel axis of rotation (4).

5. Gear wheel as claimed in any one of the preceding claims, **characterised in that** each of the support walls (12) merges via a curved transition into each of the teeth (7) which it connects.

6. Gear wheel as claimed in any one of the preceding claims, **characterised in that** the gear wheel toothing (8) is formed merely over a part of the periphery of the gear wheel (2).

7. Gear wheel as claimed in any one of the preceding claims, **characterised by** a polygonal receiver (6).

8. Gear element (3) for a gear element transmission (1), having gear element toothing (10), **characterised in that** the teeth (9) of the gear element toothing (10) are disposed mutually offset in one direction so that in each case two of the teeth (9) are disposed on opposite sides of a further one of the teeth (9) and are aligned with each other.

9. Gear element as claimed in claim 8, **characterised in that** the teeth (9) comprise alternately disposed first teeth (14) and second teeth (15), wherein the first teeth (14) begin in one direction in each case in a notional first boundary plane and extend to a notional further first boundary plane parallel to the first boundary plane, and the second teeth (15) begin in one direction in each case in a notional second boundary plane and extend to a notional further second boundary plane parallel to the second boundary plane, and wherein the first boundary plane extends spaced apart from the second teeth (15) and the second boundary plane extends spaced apart from the first teeth (14), and the further first boundary plane bisects the second teeth (15) and the further second boundary plane bisects the first teeth (14).

10. Gear element as claimed in any one of the preceding claims, **characterised in that** the first teeth (14) are more rounded on their end (16) which lies between second teeth (15) than on their opposite end, and/or that the second teeth (15) are more rounded on their end lying between first teeth (14) than on their opposite end.

11. Gear element as claimed in any one of the preceding claims, **characterised by** its structure as a gear wheel or as a gear rack.

12. Gear element transmission (1) having a gear wheel (2), in particular a gear wheel (2) as claimed in any one or more of claims 1 to 7, and having a gear element (3), in particular a gear element (3) as claimed in any one or more of claims 8 to 11, wherein gear wheel toothing (8) of the gear wheel (2) and gear element toothing (10) of the gear element (3) are in engagement with each other, **characterised in that** the teeth (7) of the gear wheel toothing (8) are connected to support walls (12), which are disposed in the peripheral direction in an alternating manner on different sides and define tooth intermediate spaces (11) in the axial direction, so that the respective tooth intermediate space (11) is open at the edge on a side opposite the respective support wall (12) in the axial direction, thus forming an mouth opening (13) which is disposed between two of the support walls (12) respectively in the peripheral direction, and/or that teeth (9) of the gear element toothing (10) are disposed offset in an alternating manner in the axial direction, so that in each case two of the teeth (9) are disposed on opposite sides of a further one of the teeth (9) and are aligned with each other in at least one direction.

13. Gear element transmission as claimed in claim 12, **characterised by** its structure as a window fitting transmission.

14. Gear element transmission as claimed in any one of the preceding claims, **characterised in that** the gear element (3) is coupled to a push rod of a window fitting.

15. Gear element transmission as claimed in any one of the preceding claims, **characterised in that** the gear wheel (2) and the gear element (3) are disposed in a common transmission housing (18).

## Revendications

1. Roue dentée (2) pour une transmission par élément denté (1), comportant une denture de roue dentée (8), **caractérisée en ce que** les dents (7) de la denture de roue dentée (8) sont reliées à des parois de support (12) délimitant des espaces interdentaires (11) dans la direction axiale et disposées alternativement sur différentes faces dans la direction circonférentielle par rapport à un axe de rotation de roue dentée (4) de la roue dentée (2), de sorte que l'espace interdentaire respectif (11) est ouvert sur le bord sur une face opposée à la paroi de support (12) respective dans la direction axiale tout en formant une embouchure (13), laquelle est disposée respectivement entre deux des parois de support (12) dans la direction circonférentielle.

2. Roue dentée selon la revendication 1, **caractérisée en ce que** la roue dentée (2) est une roue dentée droite et la denture de roue dentée (8) est présente sous forme de denture droite.

3. Roue dentée selon l'une des revendications précédentes, **caractérisée en ce que** les dents (7) de la denture de roue dentée (8) sont alignées les unes aux autres dans la direction axiale et deux des dents (7) délimitent respectivement un des espaces interdentaires (11) dans la direction circonférentielle, dans laquelle un premier des espaces interdentaires (11) et un deuxième des espaces interdentaires (11) directement adjacent au premier espace interdentaire (11) dans la direction circonférentielle sont délimités dans la direction axiale par une des parois de support (12) sur des faces différentes d'un plan imaginaire perpendiculaire à l'axe de rotation de roue dentée (4) et ouverts sur le bord dans la direction opposée.

4. Roue dentée selon l'une des revendications précédentes, **caractérisée en ce qu'**une première partie des parois de support (12) est disposée dans un premier plan perpendiculaire à l'axe de rotation de roue dentée (4) et une deuxième partie des parois de support (12) est disposées dans un deuxième plan perpendiculaire à l'axe de rotation de roue dentée (4) et à distance du premier plan.

5. Roue dentée selon l'une des revendications précédentes, **caractérisée en ce que** chacune des parois de support (12) se transforme en chaque dent (7) liée par elle par le biais d'une transition courbe.

6. Roue dentée selon l'une des revendications précédentes, **caractérisée en ce que** la denture de roue dentée (8) est réalisée uniquement sur une partie de la circonférence de la roue dentée (2).

7. Roue dentée selon l'une des revendications précédentes, **caractérisée par** un logement polygonal (6).

8. Élément denté (3) pour une transmission par élément denté (1), comportant une denture d'élément denté (10), **caractérisé en ce que** les dents (9) de la denture d'élément denté (10) sont disposées comme alternativement décalées dans une direction, de sorte que deux des dents (9) sont respectivement disposées sur des faces opposées d'une autre des dents (9) et sont alignées les unes aux autres.

9. Élément denté selon la revendication 8, **caractérisé en ce que** les dents (9) présentent des premières dents (14) et des deuxièmes dents (15) disposées en alternance, dans lequel les premières dents (14) commencent dans une direction respectivement dans un premier plan de délimitation imaginaire et s'étendent jusqu'à un autre premier plan de délimitation imaginaire parallèle au premier plan de délimitation et les deuxièmes dents (15) commencent dans une direction respectivement dans un deuxième plan de délimitation imaginaire et s'étendent jusqu'à un autre deuxième plan de délimitation imaginaire parallèle au deuxième plan de délimitation, et dans lequel le premier plan de délimitation s'étend à distance des deuxièmes dents (15) de même que le deuxième plan de délimitation s'étend à distance des premières dents (14) et l'autre premier plan de délimitation coupe les deuxièmes dents (15) et l'autre deuxième plan de délimitation coupe les premières dents (14).

10. Élément denté selon l'une des revendications précédentes, **caractérisé en ce que** les premières dents (14) sont plus fortement arrondies sur leur extrémité (16) se trouvant entre des deuxièmes dents (15) que sur leur extrémité opposée, et/ou les deuxièmes dents (15) sont plus fortement arrondies sur leur extrémité se trouvant entre des premières dents (14) que sur leur extrémité opposée.

11. Élément denté selon l'une des revendications précédentes, **caractérisé par** sa configuration comme roue dentée ou comme crémaillère.

12. Transmission par élément denté (1) comportant une roue dentée (2), en particulier une roue dentée (2) selon une ou plusieurs des revendications 1 à 7, et un élément denté (3), en particulier un élément denté (3) selon une ou plusieurs des revendications 8 à 11, dans laquelle une denture de roue dentée (8) de la roue dentée (2) et une denture d'élément denté (10) de l'élément denté (3) sont en prise l'une avec l'autre, **caractérisé en ce que** les dents (7) de la denture de roue dentée (8) sont reliées à des parois de support (12) délimitant des espaces interdentaires (11) dans la direction axiales et disposées alternativement sur différentes faces dans la direction circonférentielle, de sorte que l'espace interdentaire respectif (11) est ouvert sur le bord sur un côté opposé à la paroi de support (12) respective dans la direction axiale pour former une embouchure (13), laquelle est disposée respectivement entre deux des parois de support (12) dans la direction circonférentielle, et/ou **en ce que** les dents (9) de la denture d'élément denté (10) sont disposées alternativement décalées dans la direction axiale, de sorte que deux des dents (9) sont respectivement disposées sur des faces opposées d'une autre des dents (9) et sont alignées les unes aux autres dans au moins une direction.

13. Transmission par élément denté selon la revendication 12, **caractérisé par** sa configuration comme mécanismn de ferrure de fenêtre.

14. Transmission par élément denté selon l'une des revendications précédentes, **caractérisé en ce que** l'élément denté (3) est accouplé avec une tige de poussée d'une ferrure de fenêtre.

15. Transmission par élément denté selon l'une des revendications précédentes, **caractérisé en ce que** la roue dentée (2) et l'élément denté (3) sont disposés dans un boîtier de transmission commun (18).
